# EUROPEAN PATENT SPECIFICATION

(11) **EP 4 387 055 B1**
(45) Date of publication and mention of the grant of the patent: **03.12.2025**
(21) Application number: 22213893.5
(22) Date of filing: 15.12.2022
(51) Int. Cl.: H02K 1/20, H02K 3/24, H02K 5/20, H02K 7/18, H02K 9/06, H02K 9/197, H02K 1/18, H02K 21/22

(54) **ELECTRIC GENERATOR FOR A WIND TURBINE AND WIND TURBINE**
ELEKTRISCHER GENERATOR FÜR EINE WINDENERGIEANLAGE UND WINDENERGIEANLAGE
GÉNÉRATEUR ÉLECTRIQUE POUR ÉOLIENNE ET ÉOLIENNE

(43) Date of publication of application: 19.06.2024
(73) Proprietor: Siemens Gamesa Renewable Energy A/S, 7330 Brande (DK)
(72) Inventor: Azar, Ziad, Sheffield, S10 4ED (GB); Nilifard, Reza, 7400 Herning (DK); Taras, Petrica, Sheffield, S1 4SF (GB); Zhu, Zi-Qiang, Sheffield, S10 5TR (GB)
(74) Representative: SGRE-Association

(56) References cited:
- EP-A1- 4 102 683
- CN-A- 114 915 107
- SU-A1- 1 365 246
- US-A1- 2007 063 594
- US-A1- 2015 372 565
- US-A1- 2017 237 317

## Description

The present invention relates to an electric generator for a wind turbine, comprising a stator and a rotor having two axial ends opposed to each other, wherein a liquid cooling arrangement for cooling the stator by guiding a cooling liquid through the stator is provided.

An electric generator comprises the stator and the rotor, wherein the rotor rotates relative to the stator about an axial direction. The electric generator can be a permanent-magnet generator with a plurality of permanent magnets and an electric circuit which is constituted by a plurality of stator windings forming coils. The rotation of the rotor causes a change of the magnetic field in the wires of the stator windings which in turn cause an electric current in the electric circuit. Assuming that the electric generator is provided in a wind turbine, the wind-driven rotation of the rotor causes the rotation of the rotor and, hence, the electric current in the electric circuit which is used for energy or power generation.

Since the size of modern wind turbines become larger and larger, higher wind turbine output powers are generated. However, higher output powers result in higher torque densities in the electric generator which in turn cause higher operating temperatures in the stator and the rotor. Hence, it is essential to sufficiently cool these components, particularly the stator, since the stator- or wire windings are strongly affected by these high temperatures. To mitigate the temperature of the wire- or stator windings and also the temperature of the permanent magnets, air- and liquid cooling systems are disclosed in the state of the art, particularly in EP 2 518 868 A1, EP 4 102 683 A1, EP 2 182 619 A1 and CN 110 676 980 A. In these cooling systems, a cooling liquid is guided through the stator.

It is an object of the present invention to realize an improved cooling concept for an electric generator.

To solve this problem, according to the present invention, the electric generator as described initially is characterized in that at least two side ports which are arranged at the two opposite axial ends of the stator and at least one central port which is arranged at an axial center of the stator are provided, wherein the liquid cooling arrangement comprises at least one fluid channel for leading the cooling liquid bidirectionally through the stator such that the cooling liquid either enters the stator through the side ports and leaves the stator through the central port or enters the stator through the central port and leaves the stator through the side ports.

The present invention is based on the idea that not the complete amount of the cooling liquid has to be guided through the entire axial length of the stator. According to the present invention, a cooling liquid current is split into several branches, wherein each branch is guided through a respective part of the axial length of the stator. The fluid channel can be shaped such that at all axial positions of the stator, the cooling fluid of the respective branch passes this position only once, particularly to avoid a meander-like structure of the fluid channel. In summary, all axial parts of the stator can be flown through and, hence, cooled by at least one of the branches. The flowing direction of the cooling liquid within the branches can be opposite to each other such that the bidirectional flow is created. As a consequence, for each of the branches, the time span while the respective cooling liquid flows through the stator and the respective length of the flow path through the stator is decreased such that the temperature of the cooling liquid flowing through the stator is lower compared to the case where the cooling liquid flows through the entire axial length of the stator. Thus, the temperature difference between the cooling liquid and the stator is larger at all axial positions such that the energy or heat transfer from the stator to the cooling liquid is larger. Hence, the cooling efficiency is improved.

According to a first embodiment of the present invention, the cooling liquid enters the stator through the side ports and leaves the stator through the central port. In this embodiment, the side ports constitute an entrance port each and the central port constitutes an outlet port for the cooling fluid. In this embodiment, two cooling fluid currents or flows are provided, where each current is guided into the stator through the side ports. Regarding the axial direction, these two currents can have opposite flow directions which point towards each other. After flowing through the respective axial sections of the stator, these two currents can combine or unify and leave the stator through the central port.

According to a second embodiment of the present invention, the cooling liquid enters the stator through the central port and leaves the stator through the side ports. In this embodiment, the side ports constitute an outlet port each and the central port constitutes an entrance port for the cooling fluid. Also in this embodiment, two cooling fluid currents or flows are provided, where each current is guided into the stator through the central port or ports. Regarding the axial direction, these two currents can have opposite flow directions which point away from each other. The cooling fluid can be guided within one current and be split into at least two currents before, when or after entering the stator. After flowing through the respective axial sections of the stator, these two currents can leave the stator through the side ports.

The axial direction of the stator can be defined by the axis or direction about the rotor is rotating. The stator can be cylindrical or hollow-cylindrical in shape, wherein the longitudinal direction of the respective cylinder can define the axial direction. A radial direction can be defined as the direction pointing radially outwards from the axial direction. A circumferential direction can be defined as the direction pointing tangentially away from the radial direction, i.e., into the direction in which a point which rotates about the axial direction is moving.

The axial end of the stator can consist of the outermost axial part of the stator and particularly the part of the stator which is immediately adjacent to the outermost axial part. If the stator is cylindrical or hollow-cylindrical in shape, the outermost axial part is one of the axial front faces of the stator. The axial center of the stator can consist of the middle axial section of the stator. The axial center can be defined as the part of the stator which is arranged between the axial ends.

The generator can comprise a housing, wherein the stator and the rotor are arranged within the housing. While the stator is non-rotating, the rotor can rotate about the axial direction. The stator can comprise a stator body which can be carried by a, particularly cylindrical shaped, stator support structure. The stator body can have a segmented structure comprising several, exemplarily six, segments. The stator body can comprise a stator yoke and a plurality of teeth which protrude into the radial direction and/or which can be evenly spaced along the circumferential direction. Two adjacent teeth can laterally delimit a slot each, wherein the stator windings for realizing the coils are arranged within the slots. The windings can comprise end-windings having particularly a curved shape to connect the windings arranged in two adjacent slots. The rotor can comprise a plurality of permanent magnets which arranged, particularly evenly spaced, along the circumferential direction.

The liquid cooling arrangement can constitute a closed system. Preferably, the cooling liquid circulates in a cooling circuit, particularly comprising a pump for circulating the cooling liquid and preferably at least one chiller unit, e.g., a heat exchanger and/or a condenser and/or an evaporator to cool the cooling fluid before it is again guided through the stator. The cooling circuit splits up into several separate branches before or within the stator.

The at least one fluid channel or at least the part of the at least one fluid channel which is arranged in the stator can consist of at least one pipe or of at least one duct. The at least one pipe or the at least one duct is preferably made of one single piece, which is particularly connected with further elements, e.g., at least one stub, constituting or being connected with the respective port. The pipe or duct can be made of a material with a high thermal conductivity, e.g., a metal like steel or the like.

The at least one fluid channel or at least the part of the at least one fluid channel which is arranged in the stator can be constituted by at least one hollow section of the stator. Openings of the surface of the stator leading into the hollow section can constitute the respective ports.

The fluid channel has a longitudinal direction, wherein the fluid flowing through the fluid channel flows along the longitudinal direction. Hence, the longitudinal direction can be defined by the flow path of the cooling liquid flowing through the respective fluid channel. The longitudinal direction can be linear and/or bent and/or can even comprise angles. If the longitudinal direction is linear or straight, particularly over the entire length of the fluid channel, the longitudinal direction of the fluid channel can be the axial direction of the stator.

At least one of the longitudinal ends of the at least one fluid channel or at least one stub which is connected with one of the longitudinal ends of at least one the fluid channel can constitute the respective side port. Additionally or alternatively, a longitudinal center of the at least one fluid channel or a lateral opening arranged at the longitudinal center, respectively, can be connected with at least one stub which constitutes the respective central port. The longitudinal end and/or the stub can protrude from the surface of the stator, wherein the longitudinal end and/or the stub can be connected with a connection pipe of the liquid cooling arrangement. The connection pipe, which can also be a, particularly flexible, tube or hose, can be a part of the cooling circuit and can lead to the pump and/or the chiller unit. The connection pipe can be made of a plastic or metallic material and can be particularly constituted by a bendable metal- or PTFE-hose. The connection pipe can be connected to the fluid channel, e.g., the pipe or duct, by a connection means like a hose clamper and/or can be plugged on the longitudinal end of the pipe.

The electric generator according to the present invention can be characterized in that the cooling liquid enters the stator through the side ports along the axial direction or the radial direction and leaves the stator through the central port along a radial direction. Alternatively, the cooling liquid can enter the stator through the central port along the radial direction and leaves the stator through the side ports along the axial direction or the radial direction. These configurations can be realized by respective shapes of the fluid channels and/or components which are connected with the fluid channels, particularly the stubs. If the cooling liquid leaves or enters the stator through the side ports along the axial direction, the side ports can be arranged on the outermost axial part of the stator. If the cooling liquid leaves or enters the stator through the side ports and/or the central port along the radial direction, the respective port can be arranged on a circumferential side of the stator.

In a possible embodiment of the electric generator according to the present invention, the fluid channel comprises two longitudinal ends which constitute or communicate with one of the side ports arranged at opposite axial ends of the stator each, wherein the fluid channel comprises a longitudinal center section which constitutes or communicates with the at least one central port. In this embodiment, at least one fluid channel which can be the or a pipe or duct extends through the entire axial length of the stator, wherein the longitudinal ends of this fluid channel constitute or communicate with the side ports. In the longitudinal center section of the fluid channel, particularly in the middle of the fluid channel, the central port can be arranged. The central port can be constituted by a lateral opening of the fluid channel or by a stub which is connected to the fluid channel. In this embodiment, both branches of the liquid cooling arrangement are guided within the same fluid channel.

The electric generator according to the present invention can be characterized in that at least one first fluid channel and at least one second fluid channel and at least two central ports are provided. In this embodiment, the first fluid channel and the second fluid channel, which are particularly pipes or ducts, comprise two longitudinal ends each. One of the longitudinal ends of each of the fluid channels communicates with one of the side ports and the other longitudinal end constitutes or communicates with one of the central ports. Hence, in this embodiment, at least two fluid channels are provided, wherein each of the fluid channels constitute or communicate with one of the side ports and one of the central ports. In this embodiment, the branches of the liquid cooling arrangement are guided within several fluid channels. One of the longitudinal ends of the respective fluid channel can be connected with the central port by an elbow stub.

If the at least one first fluid channel and the at least one second fluid channel and the at least two central ports are provided, the longitudinal directions of the fluid channels can extend collinearly along the axial direction. In this embodiment, each fluid channel extends over a certain axial part of the stator. Particularly, the fluid channels comprise equal lengths such that the flow paths of the cooling liquid of the branches are equal in length.

Alternatively, the longitudinal directions of the fluid channels can extend offset to each other with respect to a radial direction and/or a circumferential direction. In this embodiment, the longitudinal directions of the fluid channels are shifted along the radial direction and/or the circumferential direction. Hence, the fluid channels are not collinearly with respect to each other. Particularly, the longitudinal directions of the fluid channels can extend along the axial direction. In this case, the longitudinal directions of the fluid channels are parallel to the axial direction but are shifted along the radial direction and/or the circumferential direction.

It is preferred that the first fluid channel and the second fluid channel overlap each other with respect to the axial direction. In this embodiment, the axial sections of the stator in which one of fluid channels is located can intersect. Hence, the cooling effect of the respective part of the stator where the fluid channels overlap each other is enhanced.

The fluid channels can extend through the stator at least partially along an inclined direction with respect to the axial direction. In this embodiment, there is an angle between the longitudinal direction of the fluid channel and the axial direction, wherein this angle is greater than 0° and less than 90°, particularly greater than 5° and less than 20°, preferably exactly 10°. Assuming that the stator is a hollow component, particularly with the shape of a hollow cylinder, one of the longitudinal ends can be located at one of the outermost axial parts of the stator and the other longitudinal end can be arranged at or in the hollow space of the stator.

In a preferred embodiment of the electric generator according to the present invention, an air gap is arranged between the stator and the rotor, wherein at least one air cooling arrangement for guiding air through the air gap is provided. In this embodiment, the air cooling arrangement and the liquid cooling arrangement constitute a hybrid cooling arrangement where air as well as the cooling liquid is used as a cooling means. Hence, a system is realized where a cooling effect for the stator as well as for the rotor is realized. Cooling the rotor might be necessary, since the permanent magnets of the rotor can be heated during the energy production. The air gap can have a width in the order of millimeters.

The air cooling arrangement and the liquid cooling arrangement can work independently from each other. However, the air cooling arrangement and the liquid cooling arrangement can be linked by a heat exchanger such that heat can be transferred from the air to the cooling liquid and/or vice versa.

The air cooling arrangement can be an open system where air from an environment of the wind turbine is guided through the air gap and then emitted into the environment again by a fan. Alternatively, the air cooling arrangement can constitute a closed system, i.e., a circuit where the air is circulated. A fan for moving the air can be provided as well as a chiller unit in the air cooling arrangement.

At least two air side ports which are arranged at the opposite axial ends of the air gap can be provided, wherein the air enters the air gap through one of the air side ports and leaves the air gap through the other air side port. In this embodiment, air enters the air gap, regarding the axial direction, from the one side and leaves the air gap on the other side. Hence, a unidirectional air flow through the air gap can be realized. The stator and the rotor can be arranged within a housing of the electric generator. The area in the housing which is located at the outermost axial part of the stator and of the rotor can constitute the air side port.

In another embodiment of the present invention, at least two air side ports which are arranged at the opposite axial ends of the air gap and at least one air central port which is arranged at an axial center of the air gap are provided, wherein the air either enters the air gap through the air side ports and leaves the air gap through the air central port or enters the air gap through the air central port and leaves the air gap through the air side ports. In this embodiment, the air current is split into several branches, wherein each branch is guided through a respective part of the axial length of the air gap. The flowing direction of the air within the branches can be opposite to each other. Hence, a bidirectional air flow can be created in the air gap.

Preferably, the stator comprises at least one air duct which extends through the stator along the radial direction, wherein the air central port communicates with the air gap by the air duct. Particularly, the stator can comprise a plurality of axial portions which are arranged along the axial direction, wherein the portions are separated from each other by the at least one air duct. The air ducts can be distributed, particularly evenly, along a certain axial part of the stator, particularly over the complete axial length of the stator. The air can enter or leave the air gap via the air ducts. In this embodiment, the air additionally flows through the stator and causes an additional cooling effect regarding the elements of the stator, particularly the stator- or wire windings.

The electric generator according to the present invention can comprise a distributed stator winding. In this embodiment, each coil or winding is housed or arranged in different slots which are not adjacent to each other. Having the distributed stator winding, the coil- or winding temperatures are expected to be higher on the axial ends than in axial center. Hence, in this embodiment, the cooling liquid preferably enters the stator through the side ports and leaves the stator through the central port. The same holds true for the air of the air cooling arrangement.

Alternatively, the electric generator according to the present invention can comprise a concentrated stator winding. In this embodiment, each coil or winding is wound around one tooth or, in other words, housed in two adjacent slots. Having the concentrated generator winding, the coil- or winding temperatures are expected to be higher in the axial center than on the axial ends. Hence, in this embodiment, the cooling liquid preferably enters the stator through the central port and leaves the stator through the side ports. The same holds true for the air of the air cooling arrangement.

Additionally, the present invention relates to a wind turbine, comprising at least one electric generator according to the foregoing description. All advantages and features which have been described with respect to the electric generator according to the present invention can be applied to the wind turbine according to the present invention and vice versa.

The wind turbine can comprise a tower on which a nacelle is arranged and a hub with several, particularly three, blades. The hub can be rotated about the axial direction, wherein the respective rotation is driven by wind which interacts with the blades. The rotation of the hub can be transferred to the rotor of the electric generator by a main shaft which extends along the axial direction. The total height of the wind turbine can be in the order of tens or hundreds of meters. The output power of the wind turbine can be in the range of multi-Megawatts, particularly between 1 and 40 Megawatts. The wind turbine can be an onshore- or an offshore wind turbine.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a view of a wind turbine according to an embodiment of the invention comprising an electric generator according to an embodiment of the invention,
- Fig. 2: a view of a radial cut through the electric generator of the wind turbine of fig. 1,
- Fig. 3: a view of a liquid cooling arrangement of a first concrete embodiment of the generator of the wind turbine of fig. 1,
- Fig. 4: a view of a liquid cooling arrangement of a second concrete embodiment of the generator of the wind turbine of fig. 1,
- Fig. 5: a view of an axial cut through the stator of a third concrete embodiment of the generator of the wind turbine of fig. 1,
- Fig. 6: a view of an axial cut through the stator of a fourth concrete embodiment of the generator of the wind turbine of fig. 1,
- Fig. 7: a view of an axial cut through the stator of a fifth concrete embodiment of the generator of the wind turbine of fig. 1,
- Fig. 8: a top view of the stator of fig. 7 according to a first possible configuration of the fifth concrete embodiment of the generator,
- Fig. 9: a top view of the stator of fig. 7 according to a second possible configuration of the fifth concrete embodiment of the generator,
- Fig. 10: a view of an axial cut through the stator of a sixth concrete embodiment of the generator of the wind turbine of fig. 1, and
- Fig. 11: a top view of the stator of fig. 10 according to a possible configuration of the sixth concrete embodiment of the generator.

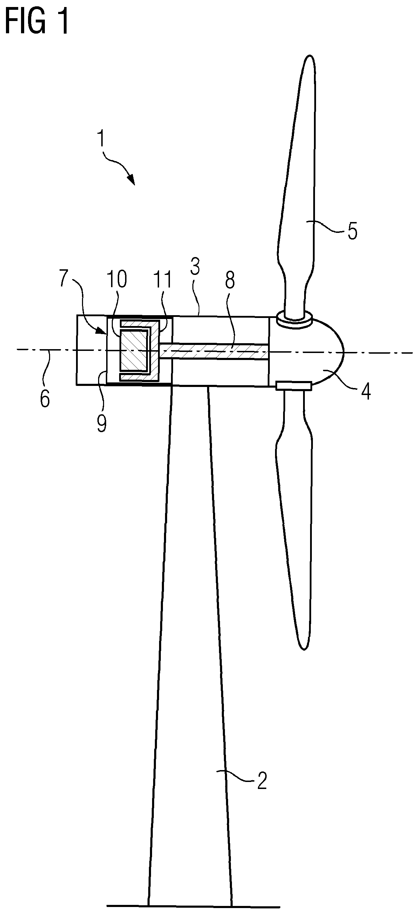

Fig. 1 shows a wind turbine 1 according to an embodiment of the present invention. The wind turbine 1 comprises a tower 2 on which a nacelle 3 is arranged and a hub 4 with several, particularly three, blades 5. The hub 4 can be rotated about an axial direction 6, wherein the respective rotation is driven by wind which interacts with the blades 5. The rotation of the hub 4 is transferred to an electric generator 7 by a main shaft 8 which extends along the axial direction 6. The axial direction is arranged horizontally but can be also tilted with respect to the horizontal direction. While the total height of the wind turbine 1 is in the order of tens or hundreds of meters, the output power of the wind turbine 1 generated by the electric generator 7 is in the range of multi-Megawatts, particularly between 1 and 40 Megawatts.

The electric generator 7 comprises a housing 9, a stator 10 and a rotor 11, wherein the stator 10 and the rotor 11 are arranged within the housing 9. The stator 10 is non-rotating. The rotor 11 is connected with the main shaft 9 such that the rotation of the hub 4 is transferred to the rotor 11 which can also rotate about the axial direction 6.

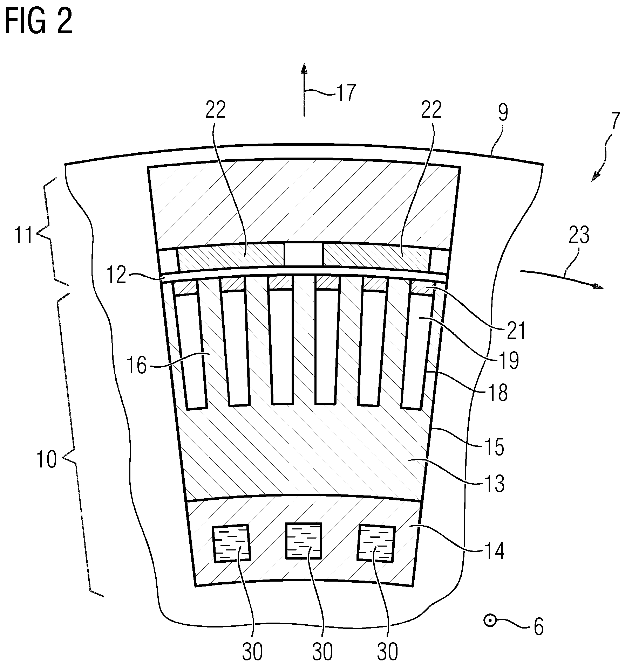

Fig. 2 shows a cross section through a segment of the electric generator 7, wherein the sectional plane is perpendicular to the axial direction 6. An air gap 12 with a thickness of a few millimeters is arranged between the stator 10 and the rotor 11. The stator 10 comprises a stator body 13 which is carried by a stator support structure 14 which has a cylindrical shape. The stator body 13 and the support structure 14 have a segmented structure each which is not explicitly shown in the figures. Exemplarily, six segments form these components.

The stator body 13 comprises a stator yoke 15 and a plurality of teeth 16 which protrude into a radial direction 17. The teeth 16 are evenly spaced along a circumferential direction 23. Two adjacent teeth 16 laterally delimit a slot 18 each. Within the slots 18, stator windings 19 for realizing coils are arranged. The windings 19 comprise end-windings 20 which have a curved shape and connect the windings 19 of several, particularly adjacent, slots 18. For separating the stator windings 19 from the air gap 12, wedges 21 are arranged at the radial ends of the slots 18.

The rotor 11 comprises a plurality of permanent magnets 22 which are arranged evenly spaced along the circumferential direction 23.

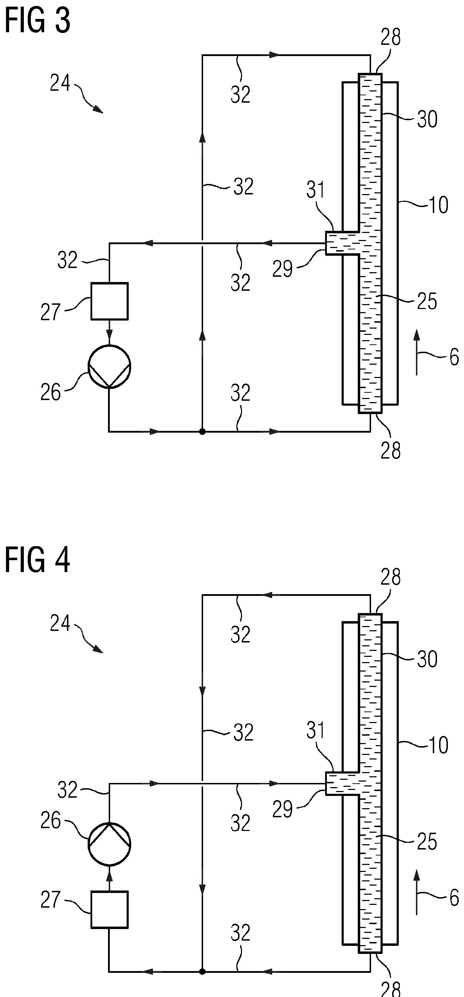

The electric generator 7 furthermore comprises a liquid cooling arrangement 24 for cooling the stator 10 by guiding a cooling liquid 25 through the stator 10. Details regarding a first concrete embodiment of the liquid cooling arrangement 24 are shown in fig. 3. In this embodiment, the liquid cooling arrangement 24 constitutes a circuit where the cooling fluid 25 circulates within a system constituted by connection pipes 32 and the stator 10. The cooling fluid 25 is driven by a pump 26 and conditioned by a chiller unit 27 which can comprise or be a heat exchanger and/or a condenser and/or an evaporator or the like. As can be seen in fig. 3, the stator 10 comprises two side ports 28 which are arranged at axial ends of the stator. Furthermore, the stator 10 comprises a central port 29 which is arranged at an axial center of the stator 10. For leading the cooling liquid 25 through the stator 10, the stator 10 comprises a fluid channel 30 which is constituted by a pipe or a duct. The pipe is made of one single piece of metal. It is also possible that the fluid channel 30 is constituted by a hollow section of the stator 10.

As can be seen in fig. 3, the cooling liquid 25 enters the stator 10 through the side ports 28 and leaves the stator 10 through the central port 29. Within the fluid channel 30, a bidirectional flow of the cooling liquid 25 with two flowing branches is realized, wherein the flowing directions of the cooling liquid 25 in these branches are opposed to each other and are directed along a longitudinal direction of the fluid channel 30 which is parallel to the axial direction 6. In the axial center of the stator 10, the flowing branches of the cooling liquid 25 are joined together such that the cooling liquid 25 leaves the stator 10 through the central port 29 as a single flowing branch.

In the embodiment of fig. 3, the fluid channel 30 comprises two longitudinal ends which protrude from the stator surface and constitute the side ports 28. Hence, the side ports 28 are arranged at opposite axial end faces of the stator 10. Each of the side ports 28 is connected with one of the connection pipes 32. On an axial center of the stator 10, the fluid channel 30 comprises a longitudinal center. The longitudinal center comprises a lateral opening of the pipe or duct. At this lateral opening, the fluid channel 30 is connected with a stub 31 which constitutes the central port 29, wherein the stub 31 is connected with one of the connection pipes 32.

Regarding the embodiment of fig. 3, the stator 10 comprises a distributed stator winding 19. This means that each coil extends over several slots 18 which are not adjacent to each other. Since for the distributed stator winding 19, the temperatures of the stator windings 19 near the axial ends are expected to be higher than in the axial center, it is advantageous that the cooling liquid enters the stator 10 at the axial ends to ensure a sufficient cooling effect of these parts of the stator 10 with higher temperatures.

Fig. 4 shows the liquid cooling arrangement 24 for the electric generator 7 according to a second embodiment of the present invention. Basically, the structure of the liquid cooling arrangement 24 of fig. 4 is the same as the structure of the liquid cooling arrangement 24 of fig. 3, apart from the differences which will be described next. Since the pump 26 pumps the cooling liquid 25 into the other direction than in the liquid cooling arrangement 24 of fig. 3, the cooling liquid 25 enters the stator 10 through the central port 29 and leaves the stator 10 through the side ports 28. In the embodiment of fig. 4, also a bidirectional flow of the cooling fluid 25 through the fluid channel 30 is realized.

Regarding the embodiment of fig. 4, the stator 10 comprises a concentrated stator winding. This means that each coil is wound around one tooth 16 such that the respective coil is housed in two adjacent slots 18. Since for the concentrated stator winding 19, the temperatures of the stator windings 19 near the axial ends are expected to be lower than in the axial center, it is advantageous that the cooling liquid enters the stator 10 at the axial center to ensure a sufficient cooling effect of these parts of the stator 10 with higher temperatures.

Although in figures 3 and 4 the liquid cooling arrangement 24 are closed systems, it is possible that the liquid cooling arrangement 24 is an open system where a cooling liquid from the outside of the wind turbine 1 can be used for cooling the electric generator 1.

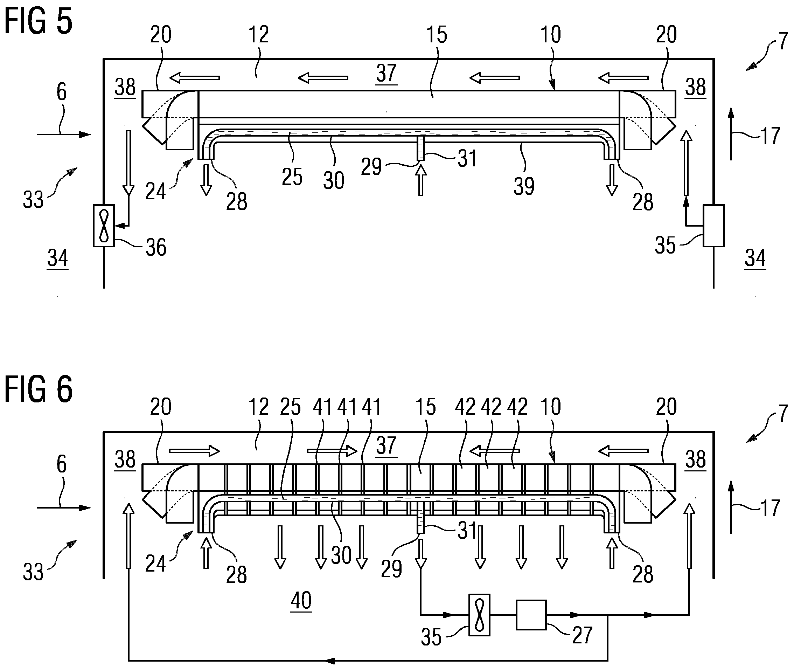

With reference to fig. 5, a third concrete embodiment of the electric generator 7 according to the present invention is described. Fig. 5 shows an axial cut through the stator 10 and the air gap 12. Fig. 5 shows a part of the liquid cooling arrangement 24 which is similar to the embodiment as shown in fig. 4. Hence, also in the embodiment of fig. 5, the cooling liquid 25 enters the stator 10 through the central port 29 and leaves the stator 10 through the side ports 28.

In contrast to the embodiment of fig. 4, however, the fluid channel 30 is shaped such that the cooling liquid 25 enters the stator 10 through the central port 29 along the radial direction 17 and leaves the stator 10 through the side ports 28 also along the radial direction 17. In contrast to this, in the embodiment of figs. 3 and 4, the fluid channel 30 is shaped such that the cooling liquid 25 enters the stator 10 through the central port 29 along the radial direction 17 and leaves the stator 10 through the side ports 28 along the axial direction 6. The direction of the cooling liquid 25 entering or leaving the stator 10 has impact on the connections between the ports 28, 29 with the connection pipes 32, which are not explicitly shown in the figures. However, the flow direction of the cooling liquid 25 of the embodiment of fig. 5 can also be such as it is described with respect to the embodiment of fig. 3 and vice versa.

In the embodiment of fig. 5, an air cooling arrangement 33 for guiding air 37 through the air gap 12 is provided. Optionally, the air cooling arrangement 33 in fig. 5 is an open system, i.e., air 37 from the outside 34 of the generator 7 is guided through the air gap 12. For this, the generator housing 9 comprises an inlet 35 and an outlet 36, wherein air 37 is sucked through the inlet 35 into the generator 7 and expelled through the outlet 36. A fan is provided in the outlet 36 to suck air 37 from the outside 34, i.e., the interior of a canopy of the nacelle 3, into the generator 7. Alternatively, the air 37 can be ambient air of the wind turbine 1. In this embodiment, the canopy of the nacelle 3 comprises the inlet 35 and the outlet 36. The air 37 which flows through the air gap 12 provides a cooling effect for the stator 10 and the rotor 11, particularly for the permanent magnets 22.

The air cooling arrangement 33 comprises two air side ports 38 which are arranged at the opposite axial ends of the air gap 12. The air 37 enters the air gap 12 through one of the air side ports 38 and leaves the air gap through the other air side port 38. Hence, a unidirectional air flow through the air gap 12 is realized.

With reference to fig. 6, a fourth concrete embodiment of the electric generator 7 according to the invention is shown. The structure of the liquid cooling arrangement 24 of fig. 6 is similar to the embodiment of fig. 3. One difference, however, is that in fig. 5, the fluid channel 30 is arranged in a water- or cooling jacket 39 of the stator 10, while in the stator 10 of fig. 6, the fluid channel 30 is located within the yoke 15 or, as it is indicated in fig. 2, in the support structure 14. Another exemplarily difference is that the cooling liquid 25 enters the stator 10 via the side ports 28 and leaves the stator 10 via the central port 29.

In the embodiment of fig. 6, an air cooling arrangement 33 which differs from the air cooling arrangement 33 of fig. 5 is provided. In contrast to the air cooling arrangement 33 of fig. 5, the air cooling arrangement 33 of fig. 6 is a closed system. In other words, the air 37 circulates within an air circuit which comprises a fan and a chiller unit.

The air cooling arrangement 33 of fig. 6 comprises two air side ports 38 which are arranged at the opposite axial ends of the air gap 12. Furthermore, an air central port 40 which is arranged at an axial center of the air gap 12 is provided. The air 37 enters the air gap 12 through the air side ports 38 and leaves the air gap 12 through the air central port 40. Hence, in this embodiment, a bidirectional flow of the air 37 in the air gap 12 is realized. Alternatively, the air 37 can enter the air gap 12 through the air central port 40 and can leave the air gap 12 through the air side ports 38.

To realize the air flow between the air gap 12 and the air central port 40, these sections are connected via air ducts 41 which extend through the stator 10 along the radial direction 17. The stator 10 comprises a plurality of axial portions 42 which are arranged along the axial direction 6, wherein the portions 42 are separated from each other by the air ducts 41. The air ducts 41 are evenly distributed along the axial direction 6.

While this is not shown in the other figures, the air cooling arrangement 33 which has been explained with the help of figures 5 and 6 can be provided for all other explained embodiments of the electric generator 7.

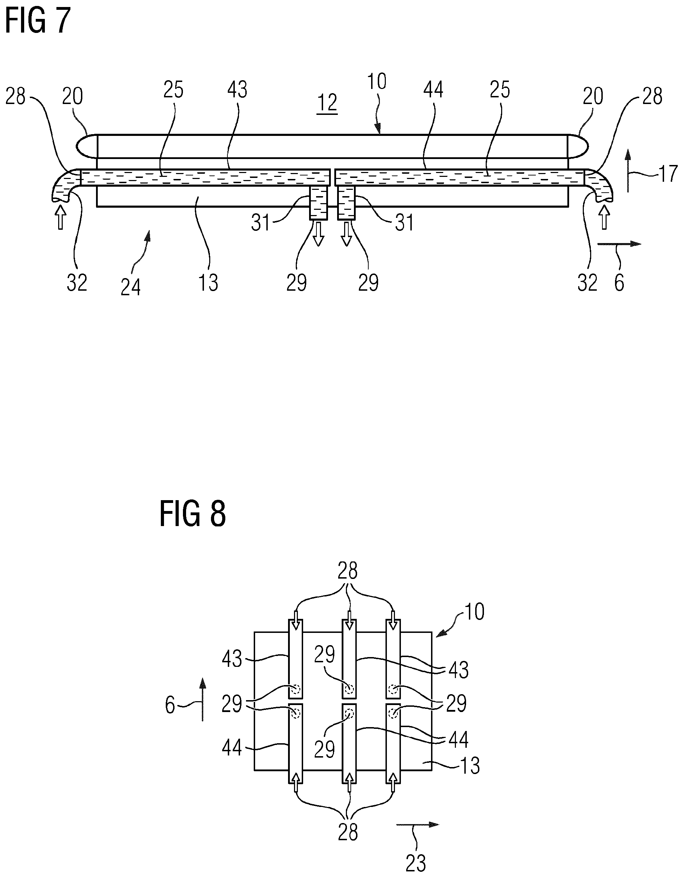

Fig. 7 shows a fifth concrete embodiment of the electric generator 7 according to the present invention. In this embodiment, the liquid cooling arrangement 24 comprises a first fluid channel 43 and a second fluid channel 44. Additionally, two central ports 29 are provided. Each of the fluid channels 43, 44 comprise two axial ends, wherein one of these ends constitute one of the side ports 28 and communicates with one of the central ports 29, namely by the stub 31 or a respective elbow stub. In this embodiment, the fluid channels 43, 44 are arranged within the support structure. However, it is also possible that the fluid channels 43, 44 are arranged in the stator yoke 15 or in the water- or cooling jacket 39.

Fig. 8 shows a first possible configuration to realize the embodiment of fig. 7. Fig. 8 shows a top view on the stator 10 or the concrete distribution of the fluid channels 43, 44, respectively. In this configuration, the longitudinal directions of the fluid channels 43, 44 extend collinearly along the axial direction 6. Concretely, several pairs of such fluid channels 43, 44 are provided, while fig. 8 shows three of these pairs.

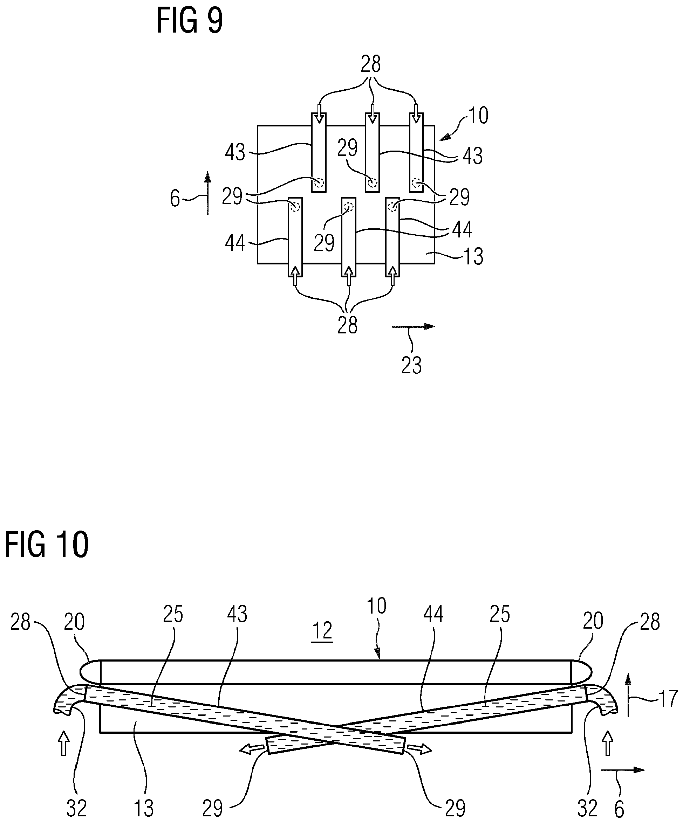

Fig. 9 shows the same view on the stator 10 as fig. 8 regarding a second possible configuration to realize the embodiment of fig. 7. In this configuration, the longitudinal directions of the fluid channels 43, 44 extend offset to each other and along the axial direction. Concretely, these directions are offset with respect to the circumferential direction 23. Additionally or alternatively, these directions can be offset with respect to the radial direction 17. In the configuration of fig. 9, several pairs of such fluid channels 43, 44 are provided, while fig. 9 shows three of these pairs. The fluid channels 43, 44 of each of these pairs have an offset into the circumferential direction 23 in fig. 9. While this is not shown in fig. 9, the first fluid channel 43 and the second fluid channel 44 can overlap each other with respect to the axial direction 6.

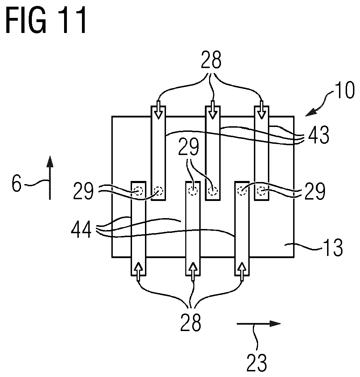

Figures 10 and 11 show a sixth embodiment of the electric generator 7 according to the invention. Fig. 10 shows the same view on the stator 10 as fig. 7 and fig. 11 shows the same view on the stator 10 as figures 8 and 9. In this embodiment, a first fluid channel 43 and a second fluid channel 44 and two central ports 29 are provided. The fluid channels 43, 44 comprise two longitudinal ends each, wherein one of the longitudinal ends of each of the fluid channels 43, 44 constitute one of the side ports 28 and the other end constitutes one of the central ports 29. The longitudinal directions of the fluid channels 43, 44 extend offset to each other. In contrast to the embodiment of figures 7 to 9, the fluid channels 43, 44 in figures 10 and 11 extend through the stator 10 along an inclined direction with respect to the axial direction 6. In other words, the fluid channels 43, 44 extend along the axial direction 6 and along the radial direction 17. Consequently, there is an angle between the axial direction 6 and the longitudinal direction of the fluid channels 43, 44 which is exemplarily 10°. Since one of the axial ends of each of the fluid channels 43, 44 constitutes one of the central ports 29, the stub 31 is not needed in this embodiment. Hence, only one single piece is needed to constitute each of the fluid channels 43, 44. Hence, the production of the respective stator 10 is simplified.

As can be seen in fig. 11, also in this embodiment the longitudinal direction of the fluid channels 43, 44 overlap each other with respect to the axial direction 6 such that the axial center of the stator 10 is cooled more efficiently.

Regarding the production of the electric generator 7 according to the present invention, in the following two concrete and exemplary methods are described. According to a first possible production method, the pipes constituting the fluid channels 30, 43, 44 can be inserted into the stator 10, particularly into the support structure 14 and/or into the stator yoke 15 using a shrink-fitting technique. This technique ensures a sufficient contact between the fluid channels 30, 43, 44 with other components of the stator 10 to allow for a sufficient heat transfer from the cooling liquid 25 to these components. This technique can be used for all embodiments which have been described before. According to a second possible production method, which particularly corresponds to the embodiment of fig. 5, the separate water- or cooling jacket 39 is built together with the fluid channels 30, 43, 44. The water- or cooling jacket 39 can then be pressed, bolted or welded to the support structure 14 and/or the stator yoke 15.

## Claims

1. Electric generator for a wind turbine (1), comprising a stator (10) and a rotor (11) having two axial ends opposed to each other, wherein a liquid cooling arrangement (24) for cooling the stator (10) by guiding a cooling liquid (25) through the stator (10) is provided, **characterized in that** at least two side ports (28) which are arranged at the two opposite axial ends of the stator (10) and at least one central port (29) which is arranged at an axial center of the stator (10) are provided, wherein the liquid cooling arrangement (24) comprises at least one fluid channel (30, 43, 44) for leading the cooling liquid (25) bidirectionally through the stator (10) such that the cooling liquid (25) either enters the stator (10) through the side ports (28) and leaves the stator (10) through the central port (29) or enters the stator (10) through the central port (29) and leaves the stator (10) through the side ports (28), wherein, for the case that the cooling liquid (25) enters the stator (10) through the side ports (28) and leaves the stator (10) through the at least one central port (29), the electric generator (7) comprises a distributed stator winding, wherein, for the case that the cooling liquid (25) enters the stator (10) through the at least one central port (29) and leaves the stator through the side ports (28), the electric generator (7) comprises a concentrated stator winding.

2. Electric generator according to claim 1, **characterized in that** the at least one fluid channel (30, 43, 44) or at least the part of the at least one fluid channel (30, 43, 44) which is arranged in the stator (10) consists of at least one pipe or of at least one duct and/or is constituted by at least one hollow section of the stator (10).

3. Electric generator according to claim 2, **characterized in that** at least one of the longitudinal ends of the at least one fluid channel (30, 43, 44) or at least one stub which is connected with one of the longitudinal ends of at least one the fluid channel (30, 43, 44) constitutes the respective side port (28) and/or that a longitudinal center of the at least one fluid channel (30, 43, 44) is connected with at least one stub (31) which constitutes the respective central port (29).

4. Electric generator according to one of the preceding claims, **characterized in that** the cooling liquid (25) either enters the stator (10) through the side ports (28) along the axial direction (6) or the radial direction (17) and leaves the stator (10) through the central port (29) along a radial direction (17) or that the cooling liquid (25) enters the stator (10) through the central port (29) along a radial direction (17) and leaves the stator (10) through the side ports (28) along the axial direction (6) or the radial direction (17).

5. Electric generator according to one of the preceding claims, **characterized in that**
- the fluid channel (30) comprises two longitudinal ends which constitute or communicate with one of the side ports (28) arranged at opposite axial ends of the stator (10) each, wherein the fluid channel (30) comprises a longitudinal center section, particularly comprising a stub (31), which constitutes or communicates with the at least one central port (29), or
- at least one first fluid channel (43) and at least one second fluid channel (44) and at least two central ports (29) are provided, wherein the first fluid channel (43) and the second fluid channel (44) comprise two longitudinal ends each, wherein one of the longitudinal ends of each of the fluid channels (43, 44) constitutes or communicates with one of the side ports (28) and the other longitudinal end constitutes or communicates with one of the central ports (29).

6. Electric generator according to claim 5, wherein the at least one first fluid channel (43) and the at least one second fluid channel (44) and the at least two central ports (29) are provided, **characterized in that** the longitudinal directions of the fluid channels (43, 44) extend collinearly along the axial direction (6).

7. Electric generator according to claim 5, wherein the at least one first fluid channel (43) and the at least one second fluid channel (44) and the at least two central ports (29) are provided, **characterized in that** the longitudinal directions of the fluid channels (43, 44) are offset to each other with respect to a radial direction (17) and/or a circumferential direction (23).

8. Electric generator according to claim 7, **characterized in that** the first fluid channel (43) and the second fluid channel (44) overlap each other with respect to the axial direction (6).

9. Electric generator according to claim 7 or 8, **characterized in that** the fluid channels (43, 44) extend through the stator (10) at least partially along an inclined direction with respect to the axial direction (6).

10. Electric generator according to one of the preceding claims, **characterized in that** an air gap (12) is arranged between the stator (10) and the rotor (11), wherein at least one air cooling arrangement (33) for guiding air (37) through the air gap (12) is provided.

11. Electric generator according to claim 10, **characterized in that** at least two air side ports (38) which are arranged at the opposite axial ends of the air gap (12) are provided, wherein the air (37) enters the air gap (12) through one of the air side ports (38) and leaves the air gap (12) through the other air side port (38).

12. Electric generator according to claim 10, **characterized in that** at least two air side ports (38) which are arranged at the opposite axial ends of the air gap (12) and at least one air central port (40) which is arranged at an axial center of the air gap (12) are provided, wherein the air (37) either enters the air gap (12) through the air side ports (38) and leaves the air gap (12) through the air central port (40) or enters the air gap (12) through the air central port (40) and leaves the air gap (12) through the air side ports (38).

13. Electric generator according to claim 12, **characterized in that** the stator (10) comprises at least one air duct (41) which extends through the stator (10) along the radial direction (17), wherein the air central port (40) communicates with the air gap (12) by the air duct (41).

14. Wind turbine, comprising at least one electric generator (7) according to one of the previous claims.

## Patentansprüche

1. Elektrischer Generator für eine Windenergieanlage (1), umfassend einen Stator (10) und einen Rotor (11) mit zwei axialen Enden, die einander gegenüberliegen, wobei eine Flüssigkeitskühlanordnung (24) zum Kühlen des Stators (10) durch Führen einer Kühlflüssigkeit (25) durch den Stator (10) vorgesehen ist, **dadurch gekennzeichnet, dass** mindestens zwei seitliche Öffnungen (28), die an den beiden gegenüberliegenden axialen Enden des Stators (10) angeordnet sind, und mindestens ein zentrale Öffnung (29) vorgesehen sind, die in einer axialen Mitte des Stators (10) angeordnet ist, wobei die Flüssigkeitskühlanordnung (24) mindestens einen Fluidkanal (30, 43, 44) zum bidirektionalen Leiten der Kühlflüssigkeit (25) durch den Stator (10) umfasst, so dass die Kühlflüssigkeit (25) entweder durch die seitlichen Öffnungen (28) in den Stator (10) eintritt und den Stator (10) durch die zentrale Öffnung (29) verlässt oder durch die zentrale Öffnung (29) in den Stator (10) eintritt und den Stator (10) durch die seitlichen Öffnungen (28) verlässt, wobei für den Fall, dass die Kühlflüssigkeit (25) durch die seitlichen Öffnungen (28) in den Stator (10) eintritt und den Stator (10) durch die mindestens eine zentrale Öffnung (29) verlässt, der elektrische Generator (7) eine verteilte Statorwicklung aufweist, wobei für den Fall, dass die Kühlflüssigkeit (25) durch die mindestens eine zentrale Öffnung (29) in den Stator (10) eintritt und den Stator durch die seitlichen Öffnungen (28) verlässt, der elektrische Generator (7) eine konzentrierte Statorwicklung aufweist.

2. Elektrischer Generator nach Anspruch 1, **dadurch gekennzeichnet, dass** der mindestens einen Fluidkanal (30, 43, 44) oder zumindest der Teil des mindestens einen Fluidkanals (30, 43, 44), der im Stator (10) angeordnet ist, aus mindestens einem Rohr oder mindestens einer Leitung besteht und/oder durch mindestens einen Hohlabschnitt des Stators (10) ausgebildet ist.

3. Elektrischer Generator nach Anspruch 2, **dadurch gekennzeichnet, dass** mindestens eines der Längsenden des mindestens einen Fluidkanals (30, 43, 44) oder mindestens ein Stutzen, der mit einem der Längsenden mindestens eines des Fluidkanals (30, 43, 44) verbunden ist, die jeweilige seitliche Öffnung (28) bildet und/oder dass ein Längsmittelpunkt des mindestens einen Fluidkanals (30, 43, 44) mit mindestens einem Stutzen (31) verbunden ist, der die jeweilige zentrale Öffnung (29) bildet.

4. Elektrischer Generator nach einem der vorhergehenden Ansprüche, **dadurch gekennzeichnet, dass** die Kühlflüssigkeit (25) entweder durch die seitlichen Öffnungen (28) entlang der axialen Richtung (6) oder der radialen Richtung (17) in den Stator (10) eintritt und den Stator (10) durch die zentrale Öffnung (29) entlang einer radialen Richtung (17) verlässt oder dass die Kühlflüssigkeit (25) durch die zentrale Öffnung (29) entlang einer radialen Richtung (17) in den Stator (10) eintritt und den Stator (10) durch die seitlichen Öffnungen (28) entlang der axialen Richtung (6) oder der radialen Richtung (17) verlässt.

5. Elektrischer Generator nach einem der vorhergehenden Ansprüche, **dadurch gekennzeichnet, dass**
- der Fluidkanal (30) zwei Längsenden umfasst, die eine der seitlichen Öffnungen (28), die jeweils an gegenüberliegenden axialen Enden des Stators (10) angeordnet sind, bilden oder damit in Verbindung stehen, wobei der Fluidkanal (30) einen Längsmittelabschnitt umfasst, der insbesondere einen Stutzen (31) umfasst, der die mindestens eine zentrale Öffnung (29) bildet oder damit in Verbindung steht, oder
- mindestens ein erster Fluidkanal (43) und mindestens ein zweiter Fluidkanal (44) und mindestens zwei zentrale Öffnungen (29) vorgesehen sind, wobei der erste Fluidkanal (43) und der zweite Fluidkanal (44) jeweils zwei Längsenden umfassen, wobei eines der Längsenden jedes Fluidkanals (43, 44) eine der seitlichen Öffnungen (28) bildet oder damit in Verbindung steht und das andere Längsende eine der zentralen Öffnungen (29) bildet oder damit in Verbindung steht.

6. Elektrischer Generator nach Anspruch 5, **dadurch gekennzeichnet, dass** der mindestens eine erste Fluidkanal (43) und der mindestens eine zweite Fluidkanal (44) und die mindestens zwei zentralen Öffnungen (29) vorgesehen sind, **dadurch gekennzeichnet, dass** die Längsrichtungen der Fluidkanäle (43, 44) kollinear entlang der axialen Richtung (6) verlaufen.

7. Elektrischer Generator nach Anspruch 5, **dadurch gekennzeichnet, dass** der mindestens eine erste Fluidkanal (43) und der mindestens eine zweite Fluidkanal (44) und die mindestens zwei zentralen Öffnungen (29) vorgesehen sind, **dadurch gekennzeichnet, dass** die Längsrichtungen der Fluidkanäle (43, 44) in Bezug auf eine radiale Richtung (17) und/oder eine Umfangsrichtung (23) zueinander versetzt sind.

8. Elektrischer Generator nach Anspruch 7, **dadurch gekennzeichnet, dass** sich der erste Fluidkanal (43) und der zweite Fluidkanal (44) in Bezug auf die axiale Richtung (6) überlappen.

9. Elektrischer Generator nach Anspruch 7 oder 8, **dadurch gekennzeichnet, dass** die Fluidkanäle (43, 44) durch den Stator (10) zumindest teilweise entlang einer geneigten Richtung in Bezug auf die axiale Richtung (6) verlaufen.

10. Elektrischer Generator nach einem der vorangehenden Ansprüche, **dadurch gekennzeichnet, dass** zwischen dem Stator (10) und dem Rotor (11) ein Luftspalt (12) angeordnet ist, wobei mindestens eine Luftkühlanordnung (33) zum Führen von Luft (37) durch den Luftspalt (12) vorgesehen ist.

11. Elektrischer Generator nach Anspruch 10, **dadurch gekennzeichnet, dass** mindestens zwei seitliche Luftöffnungen (38) vorgesehen sind, die an den gegenüberliegenden axialen Enden des Luftspalts (12) angeordnet sind, wobei die Luft (37) durch eine der seitlichen Luftöffnungen (38) in den Luftspalt (12) eintritt und den Luftspalt (12) durch die andere seitliche Luftöffnung (38) verlässt.

12. Elektrischer Generator nach Anspruch 10, **dadurch gekennzeichnet, dass** mindestens zwei seitliche Luftöffnungen (38), die an den gegenüberliegenden axialen Enden des Luftspalts (12) angeordnet sind, und mindestens eine zentrale Luftöffnung (40) vorgesehen sind, die an einem axialen Mittelpunkt des Luftspalts (12) angeordnet ist, wobei die Luft (37) entweder durch die seitlichen Luftöffnungen (38) in den Luftspalt (12) eintritt und den Luftspalt (12) durch die zentrale Luftöffnung (40) verlässt oder durch die zentrale Luftöffnung (40) in den Luftspalt (12) eintritt und den Luftspalt (12) durch die seitlichen Luftöffnungen (38) verlässt.

13. Elektrischer Generator nach Anspruch 12, **dadurch gekennzeichnet, dass** der Stator (10) mindestens eine Luftleitung (41) umfasst, die entlang der radialen Richtung (17) durch den Stator (10) verläuft, wobei die zentrale Luftöffnung (40) durch die Luftleitung (41) mit dem Luftspalt (12) in Verbindung steht.

14. Windenergieanlage, umfassend mindestens einen elektrischen Generator (7) nach einem der vorhergehenden Ansprüche.

## Revendications

1. Générateur électrique pour une éolienne (1), comprenant un stator (10) et un rotor (11) ayant deux extrémités axiales opposées l'une par rapport à l'autre, dans lequel un agencement de refroidissement de liquide (24) pour refroidir le stator (10) en guidant un liquide de refroidissement (25) à travers le stator (10) est fourni, **caractérisé en ce qu'**au moins deux orifices latéraux (28) qui sont agencés au niveau des deux extrémités axiales opposées du stator (10) et au moins un orifice central (29) qui est agencé au niveau d'un centre axial du stator (10) sont fournis, dans lequel l'agencement de refroidissement de liquide (24) comprend au moins un canal de fluide (30, 43, 44) pour conduire le liquide de refroidissement (25) de manière bidirectionnelle à travers le stator (10) de sorte que le liquide de refroidissement (25), soit entre dans le stator (10) à travers les orifices latéraux (28) et quitte le stator (10) à travers l'orifice central (29), soit entre dans le stator (10) à travers l'orifice central (29) et quitte le stator (10) à travers les orifices latéraux (28), dans lequel, pour le cas où le liquide de refroidissement (25) entre dans le stator (10) à travers les orifices latéraux (28) et quitte le stator (10) à travers le au moins un orifice central (29), le générateur électrique (7) comprend un enroulement de stator distribué, dans lequel, pour le cas où le liquide de refroidissement (25) entre dans le stator (10) à travers le au moins un orifice central (29) et quitte le stator à travers les orifices latéraux (28), le générateur électrique (7) comprend un enroulement de stator concentré.

2. Générateur électrique selon la revendication 1, **caractérisé en ce que** le au moins un canal de fluide (30, 43, 44) ou au moins la partie du au moins un canal de fluide (30, 43, 44) qui est agencé dans le stator (10) est constituée d'au moins une canalisation ou d'au moins un conduit et/ou est constituée d'au moins une section creuse du stator (10).

3. Générateur électrique selon la revendication 2, **caractérisé en ce qu'**au moins l'une des extrémités longitudinales du au moins un canal de fluide (30, 43, 44) ou au moins un embout qui est raccordé à l'une des extrémités longitudinales d'au moins le canal de fluide (30, 43, 44) constitue l'orifice latéral (28) respectif et/ou **en ce qu'**un centre longitudinal du au moins un canal de fluide (30, 43, 44) est raccordé à au moins un embout (31) qui constitue l'orifice central (29) respectif.

4. Générateur électrique selon l'une des revendications précédentes, **caractérisé en ce que** le liquide de refroidissement (25) soit entre dans le stator (10) à travers les orifices latéraux (28) le long de la direction axiale (6) soit de la direction radiale (17) et quitte le stator (10) à travers l'orifice central (29) le long d'une direction radiale (17) soit **en ce que** le liquide de refroidissement (25) entre dans le stator (10) à travers l'orifice central (29) le long d'une direction radiale (17) et quitte le stator (10) à travers les orifices latéraux (28) le long de la direction axiale (6) ou de la direction radiale (17).

5. Générateur électrique selon l'une des revendications précédentes, **caractérisé en ce que**
- le canal de fluide (30) comprend deux extrémités longitudinales qui constituent ou qui communiquent avec l'un des orifices latéraux (28) agencés au niveau des extrémités axiales opposées du stator (10) chacun, dans lequel le canal de fluide (30) comprend une section centrale longitudinale, comprenant particulièrement un embout (31), qui constitue ou qui communique avec le au moins un orifice central (29), ou
- au moins un premier canal de fluide (43) et au moins un second canal de fluide (44) et au moins deux orifices centraux (29) sont fournis, dans lequel le premier canal de fluide (43) et le second canal de fluide (44) comprennent chacun deux extrémités longitudinales, dans lequel l'une des extrémités longitudinales de chacun des canaux de fluide (43, 44) constitue ou communique avec l'un des orifices latéraux (28) et l'autre extrémité longitudinale constitue ou communique avec l'un des orifices centraux (29).

6. Générateur électrique selon la revendication 5, dans lequel le au moins un premier canal de fluide (43) et le au moins un second canal de fluide (44) et les au moins deux orifices centraux (29) sont fournis, **caractérisé en ce que** les directions longitudinales des canaux de fluide (43, 44) s'étendent de manière colinéaire le long de la direction axiale (6).

7. Générateur électrique selon la revendication 5, dans lequel le au moins un premier canal de fluide (43) et le au moins un second canal de fluide (44) et les au moins deux orifices centraux (29) sont fournis, **caractérisé en ce que** les directions longitudinales des canaux de fluide (43, 44) sont décalées l'une par rapport à l'autre par rapport à une direction radiale (17) et/ou une direction circonférentielle (23).

8. Générateur électrique selon la revendication 7, **caractérisé en ce que** le premier canal de fluide (43) et le second canal de fluide (44) se chevauchent l'un l'autre par rapport à la direction axiale (6).

9. Générateur électrique selon la revendication 7 ou 8, **caractérisé en ce que** les canaux de fluide (43, 44) s'étendent à travers le stator (10) au moins partiellement le long d'une direction inclinée par rapport à la direction axiale (6).

10. Générateur électrique selon l'une des revendications précédentes, **caractérisé en ce qu'**un espace d'air (12) est agencé entre le stator (10) et le rotor (11), dans lequel au moins un agencement de refroidissement d'air (33) pour guider l'air (37) à travers l'espace d'air (12) est fourni.

11. Générateur électrique selon la revendication 10, **caractérisé en ce qu'**au moins deux orifices latéraux d'air (38) qui sont agencés au niveau des extrémités axiales opposées de l'espace d'air (12) sont fournis, dans lequel l'air (37) entre dans l'espace d'air (12) à travers l'un des orifices latéraux d'air (38) et quitte l'espace d'air (12) à travers l'autre orifice latéral d'air (38).

12. Générateur électrique selon la revendication 10, **caractérisé en ce que** les au moins deux orifices latéraux d'air (38) qui sont agencés au niveau des extrémités axiales opposées de l'espace d'air (12) et au moins l'un de l'orifice central d'air (40) qui est agencé au niveau d'un centre axial de l'espace d'air (12) sont fournis, dans lequel l'air (37) soit entre dans l'espace d'air (12) à travers les orifices latéraux d'air (38) et quitte l'espace d'air (12) à travers l'orifice central d'air (40) soit entre dans l'espace d'air (12) à travers l'orifice central d'air (40) et quitte l'espace d'air (12) à travers les orifices latéraux d'air (38).

13. Générateur électrique selon la revendication 12, **caractérisé en ce que** le stator (10) comprend au moins un conduit d'air (41) qui s'étend à travers le stator (10) le long de la direction radiale (17), dans lequel l'orifice central d'air (40) communique avec l'espace d'air (12) par le conduit d'air (41).

14. Éolienne, comprenant au moins un générateur électrique (7) selon l'une des revendications précédentes.
